# EUROPEAN PATENT SPECIFICATION

(11) **EP 0 689 746 B1**
(45) Date of publication and mention of the grant of the patent: **19.10.2005**
(21) Application number: 95903674.0
(22) Date of filing: 05.12.1994
(51) Int. Cl.: H04L 12/56, H04Q 11/04

(54) **METHOD AND SYSTEM FOR ATM TRAFFIC MANAGEMENT**
VERFAHREN UND SYSTEM ZUR VERWALTUNG VON ATM-VERKEHR
PROCEDE ET SYSTEME DE GESTION DE TRAFIC ATM

(30) Priority: 14.01.1994 US 181681
(43) Date of publication of application: 03.01.1996
(73) Proprietor: MOTOROLA, INC., Schaumburg, IL 60196 (US)
(72) Inventor: GROSSMAN, Daniel, B., Norwood, MA 02062 (US); HLUCHYJ, Michael, G., Wellesley, MA 02181 (US)
(74) Representative: Cross, Rupert Edward Blount
(86) International application number: PCT/US1994/013907
(87) International publication number: WO 1995/019675

(56) References cited:
- US-A- 4 190 821
- US-A- 4 446 551
- US-A- 5 333 130
- CHAN S ET AL: "A REACTIVE CONGESTION CONTROL METHOD FOR ATM NETWORKS" PROC SEVENTH AUSTRALIAN TELETRAFFIC RESEARCH SEMINAR, 1 January 1992 (1992-01-01), pages 307-313, XP000537075
- JONATHAN CHAO H: "A GENERAL ARCHITECTURE FOR LINK-LAYER CONGESTION CONTROL IN ATM NETWORKS" PROCEEDINGS OF THE INTERNATIONAL SWITCHING SYMPOSIUM, YOKOHAMA, OCT. 25 - 30, 1992, vol. 1, no. SYMP. 14, 25 October 1992 (1992-10-25), pages 229-233, XP000337649 INSTITUTE OF ELECTRONICS;INFORMATION AND COMMUNICATION ENGINEERS

## Description

### Field of the Invention

This invention relates generally to methods of network traffic management, and more particularly to network traffic management in a cell relay network.

### Background

It is well known that ATM networks are subject to congestion when the traffic offered to the network exceeds the capacity of the network. Such congestion conditions need to be controlled in order to guarantee, for each ATM connection, the Quality of Service (QOS) negotiated between the communicating end systems and ATM network during call establishment.

Recommendations for traffic control and congestion control in ATM networks are contained in ITU-T (Telecommunication Standardization Sector of the International Telecommunication Union, formerly CCITT) Recommendation 1.371 and in the ATM Forum UNI 3.0 Specification. One of the congestion control mechanisms defined in these recommendations is the Explicit Forward Congestion Indication (EFCI). This is an optional mechanism that may be used to assist the network in the avoidance of and recovery from a congested state. A network element (e.g., a cell buffer queue feeding an internodal link) that is in a congested state may set the EFCI in the header of cells passing through it to indicate the existence of congestion (in the direction of the cell flow) to the destination end system. Cells when first introduced into the network by the source end system have the value of this indication set to "congestion not experienced." Also, a network element that is not congested is not allowed to modify the value of this indication. Hence, if a cell encounters at least one network element that is congested along the path of its ATM connection, the destination end system is informed of this congested state via the EFCI in the cell header. Although not specified in either 1.371 or the ATM Forum UNI 3.0 Specification, it is suggested that the EFCI may be used to implement higher layer protocols in the end systems that adaptively lower the cell rate during congestion. Studies of feedback-based congestion control mechanisms that may make use of EFCI show promise of achieving effective, yet simple, congestion control in ATM networks.

Despite the simplicity of an end-to-end congestion control mechanism based on EFCI, there is concern that such a mechanism would not provide effective control over misbehaving or malfunctioning end systems. That is, suppose the end systems for an ATM connection do not react appropriately to the indication of congestion carried by EFCI (e.g., do not reduce the cell rate for the connection). Other end systems that are appropriately reacting to congestion indications may be at a disadvantage and, in some cases, may not even obtain the QOS guaranteed to their ATM connections. This has led to other traffic management proposals that require the generation of special traffic management (TM) cells from different points in the network (edge and/or intermediate) back toward the source end system. These cells effectively form a backward indication of congestion.

The advantage of using network (rather then end system) generated TM cells is that the network does not have to depend on the destination end system to properly signal the congestion indication back to the source end system.
Moreover, the traffic policing (referred to as User Parameter Control) functions, usually performed at the source edge node of the network, can use these backward TM cells to implement protective traffic management mechanisms.

However, the generation of backward TM cells for each ATM connection represents a considerable complexity burden to the processing of ATM cells at edge and intermediate nodes in the network. Moreover, unlike the EFCI indications which are forwarded in cell headers of normal end system traffic, the backward TM cells consume link bandwidth resources and may be generated from multiple points in the network. This burden of backward indications is particularly evident when one is using a single ATM Virtual Path Connection (VPC) to carry multiple (say, 100s) of Virtual Channel Connections (VCCs). A single backward indication on a VPC across an ATM interface between two ATM networks may require the generation of a separate backward TM cell for each of the multiplexed VCCs.

Thus, there is a need for an efficient network traffic management method and system that combines an end-to-end closed-loop control method with the protection capabilities of a subnetwork-level feedback and policing function in a cell relay communication network.

### Brief Descriptions of the Drawings

FIG. 1 is a block diagram illustrating ATM source and destination end systems coupled with an ATM network.
FIG. 2 shows an embodiment of a traffic management system (TMS) for providing cell flow regulation in a cell relay asynchronous transfer mode (ATM) communication network in accordance with the present invention.
FIG. 3 shows an embodiment of the ingress node of FIG. 2 with greater particularity.
FIG. 4 shows a flow chart of the steps of an embodiment of a method in accordance with the present invention.
FIG 5 shows a flow chart of the steps of one embodiment of transmitting the cells from the source edge node to the remaining traffic management nodes utilizing a segment traffic control mechanism for protecting nodes in a segment of the network against malfunctioning end systems in accordance with the present invention.
FIG. 6 shows a flow chart of the steps of one embodiment of implementing the segment traffic control mechanism of FIG. 5 by the ingress node in accordance with the present invention.

### Detailed Description of a Preferred Embodiment

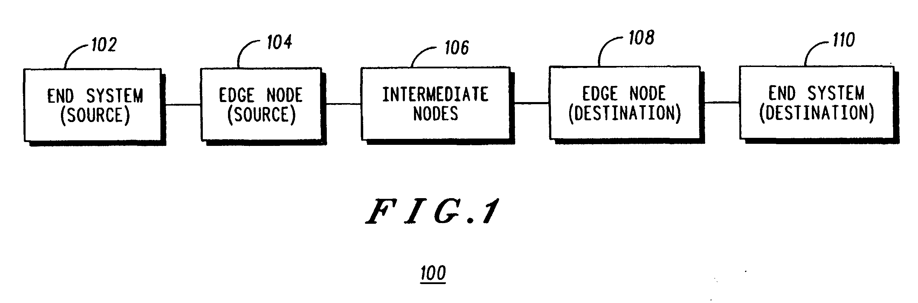

An ATM system may be configured as shown in FIG. 1, numeral 100, in which ATM source (102) and destination (110) end systems are coupled with an ATM network including: a source edge node (104), one or more intermediate nodes (where selected) (106), and a destination edge node (108). ATM cells generated by the source end system (102) are transmitted via the source edge node (104), intermediate nodes (106), and destination edge node (108) to the destination end system (110).

A wide variety of congestion control schemes are known. Hop-by-hop flow control techniques are popular in X.25 networks and have recently been proposed in the context of ATM networks. End-to-end rate-based schemes have been considered, and support for the forwarding of congestion indications is included in ATM and Frame Relay standards. Per-connection ingress buffering with dynamic rate control has been considered. In addition, as noted below, the concept of segment control cells is well known within the context of operations and maintenance in ATM networks. However, the combination of utilizing an end-to-end closed-loop rate control mechanism for controlling the flow of cells entering an ATM network from an ATM end system, along with a segment traffic control mechanism for protecting the segment against misbehaving or malfunctioning end systems is new.

The concept of an ATM network segment was introduced in the context of ATM Operations and Maintenance (OAM) control traffic flows in ITU-T Recommendation 1.610, in which a segment flow is used for communicating operations information within the bounds of one or more links that are under the control of one administration or organization. A segment flow is used, for example, to check the connectivity of a particular segment of an ATM connection in the course of trouble-shooting a network fault. The administration/organization that controls the insertion of these OAM cells for the operations and maintenance of a VPC or VCC segment must ensure that such OAM cells are extracted before they leave the span of control of the administration/organization.

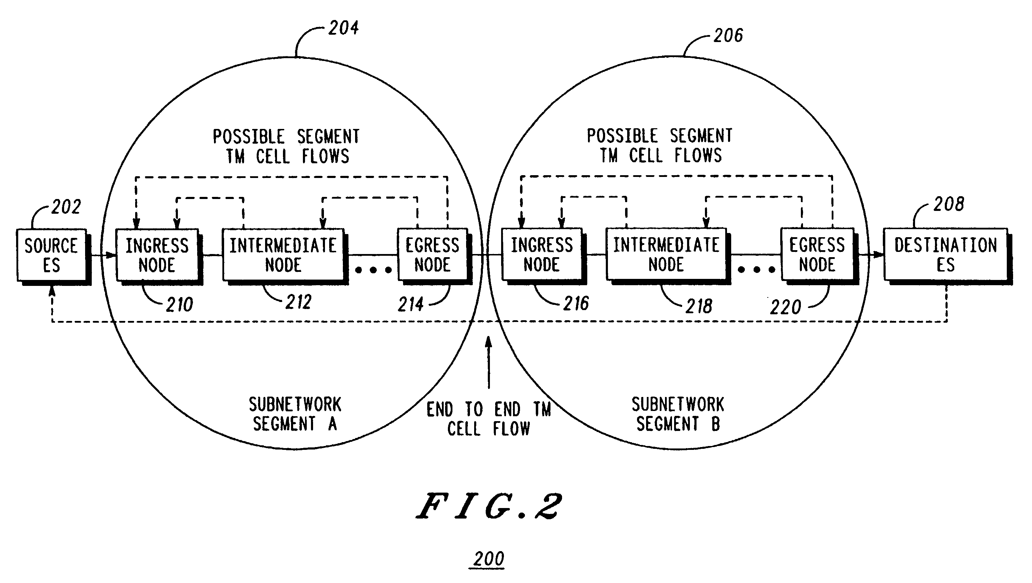

FIG. 2, numeral 200, shows a block diagram of an embodiment of a system in accordance with the present invention. The present invention uses an end-to-end, closed-loop control mechanism to regulate the flow of cells entering the ATM network from a source end system for each connection. In addition, to protect against misbehaving or malfunctioning end systems, the network, or each of one or more interconnected subnetworks through which the ATM connection flows, selectively uses a segment congestion control function. Upon selection, the segment congestion control mechanism monitors, for each connection, the EFCI state in cells leaving the egress edge of the subnetwork, and then communicates congestion state changes via backward TM cells to the ingress edge of the subnetwork. At the ingress edge, congestion state changes selectively regulate the flow of cells entering the subnetwork. During periods of congestion, a buffer is used at the ingress edge for each connection to temporarily hold incoming cells to prevent a worsening of the congestion along the connection path in the subnetwork. The overflow of the subnetwork ingress buffer is avoided by the end-to-end control mechanism that regulates the flow of cells leaving the source end system for the connection. The end-to-end control mechanism is based on the EFCI received at the destination end system, with congestion state changes signaled back to the source end system using end-to-end backward TM cells.

A per-connection subnetwork ingress buffer, with segment TM cells used to regulate the flow of cells into the subnetwork, serves as a firewall to protect the subnetwork against misbehaving or malfunctioning end systems. When an end system does not adjust in response to congestion signaled by the EFCI in cells traversing the network, the ingress buffer serving its connection may overflow, resulting in only the loss of cells from the misbehaving or malfunctioning end system. Alternately, the segment may use backward TM cells originating from the point of congestion, traveling back toward the ingress edge of the subnetwork. In still another alternative, a hop-by-hop per-connection flow control can be used within the subnetwork, again making use of segment TM cells to regulate the flow of cells on each internodal link. Note, in addition, that different segments of the same connection can use different segment traffic management mechanisms.

In the present invention, the segment TM cells are not permitted to leave the defined subnetwork boundaries of the segment. The coupling of congestion control signaling between segments and across the ATM interface to end systems is through the end-to-end closed-loop rate control mechanism based on the EFCI and the end-to-end backward TM cells used to signal congestion state changes from the destination end system to the source end system.

FIG. 2, numeral 200, shows an embodiment of a traffic management system (TMS) for providing cell flow regulation in a cell relay asynchronous transfer mode (ATM) communication network in accordance with the present invention. The TMS includes a source end system (202), a source edge node (210), a plurality of nodes (212, 214, 216, 218), a destination edge node (220), and a destination end system (208). In the embodiment in FIG. 2, two subnetwork segments (A, 204; B, 206) are shown. Clearly, the number of subnetworks is selectable. In addition, each subnetwork illustrated includes: an ingress node (210, 216); where selected, an intermediate node (212, 218); and an egress node (214, 220). The number of intermediate nodes for each subnetwork is selectable. In addition, the ingress node of subnetwork segment A is utilized as the source edge node (210) and the egress node of subnetwork segment B is utilized as the destination edge node (220).

The source end system (202) is utilized for transmitting cells to a serially coupled plurality of traffic management nodes (210, 212, 214, 216, 218, 220). The traffic management nodes (210, 212, 214, 216, 218, 220) are utilized for providing pathway(s) for cells across the network and for utilizing a segment traffic control mechanism for protecting nodes in a segment of the network against malfunctioning end systems.
The first of the plurality of traffic management nodes is an ingress node (210), and also functions as a source edge node. The ingress node (210) is operably coupled to the source end system (202) and is used for providing at least cell entry-exit. The last of the serially coupled plurality of traffic management nodes, the egress node (220) functions as a destination edge node, is serially coupled to the remainder of the serially coupled plurality of node(s), and is used for providing at least cell entry-exit. The destination end system (208) is operably coupled to the egress node (220) and is used for receiving cells. The source end system (202) and destination end system (208) implement an end-to-end closed-loop rate control mechanism for controlling the flow of cells entering the network.

The plurality of traffic management nodes (210, 212, 214, 216, 218, 220) typically include at least a first subnetwork (204, 206, ...) of nodes that generate traffic management (TM) cells that are sent to preselected prior nodes within the subnetwork for implementing the segment traffic control mechanism. The destination end system (208) generates TM cells that are sent to the source end system for implementing the end-to-end closed-loop rate control mechanism. Each subnetwork (204, 206, ...) includes: (1) an ingress node (210, 216, ...) that is operably coupled to receive cells from the source end system (202) or an egress node (214) of another subnetwork and is used for regulating the flow of cells into the subnetwork in accordance with a predetermined received TM cell scheme; (2) where selected, at least a first intermediate node (212, 218, ...) that is operably coupled to the ingress node (210, 216 ...) and is used for providing a pathway for cells and for selectably sending TM cells to at least one of the ingress node and previous intermediate node(s) of the subnetwork, and (3) an egress node (214, 220, ...) that is operably coupled to the intermediate node(s) (212, 218, ...) for selectably providing TM cells to at least one of: the ingress node (210, 216, ...) of the subnetwork (204, 206, ...) and preselected intermediate node(s) (212, 218, ...), and for providing a pathway for cells to another subnetwork or the destination end system (208).

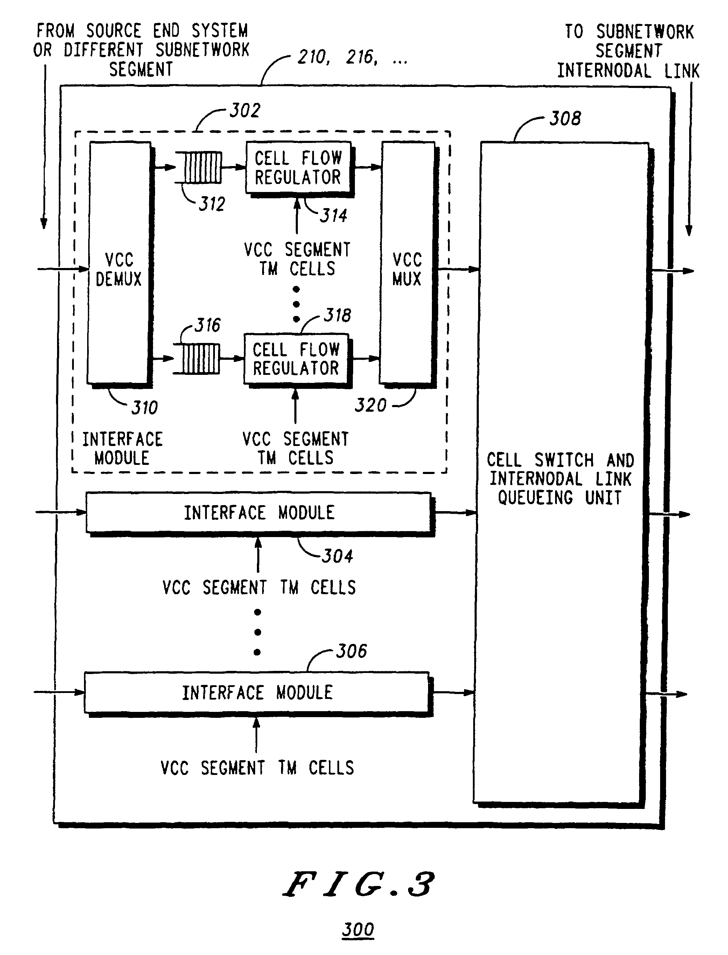

The segment traffic control mechanism is implemented by the ingress node (210, 216, ...), as shown in FIG. 3, numeral 300. The ingress node (210, 216, ...) typically includes a plurality (302, 304, 306, ...) of interface modules with per VCC (Virtual Channel Connection) cell buffers and per VCC segment controlled cell flow regulation, for regulating cell flow through the subnetwork, each operably coupled to receive cells from a source end system (202) or a subnetwork (204) other than the subnetwork (206) of the ingress node (216), and a cell switch and internodal link queueing unit (308) that is operably coupled to the plurality of interface modules (302, 304, 306, ...) and is used for providing predetermined internodal link queueing of cells from the interface modules (302, 304, 306, ...).

Each interface module (302, 304, 306, ...) typically includes a VCC demultiplexer (VCC DEMUX) (310), a plurality of buffers (312, 316, ...), a plurality of cell flow regulators (314, 318, ...), and a VCC multiplexer (VCC MUX) (320). The VCC DEMUX is operably coupled to receive and demultiplex cells from a source end system or a subnetwork other than the subnetwork of the ingress node. Each of the plurality of buffers (312, 316, ...) is coupled to the VCC DEMUX (310) and is used for temporarily holding incoming cells to prevent worsening of congestion along a connection path in the network. Each of the plurality of cell flow regulators (314, 318, ...) is operably coupled to one of the buffers and is used to receive TM cells from within the subnetwork utilizing a virtual channel connection (VCC), for regulating the cell flow according to a predetermined scheme. The VCC MUX (320) is operably coupled to the plurality of cell flow regulators (314, 318, ...) and is used for multiplexing received cells.

The end-to-end closed-loop rate control mechanism generally regulates the flow of cells leaving the source end system in accordance with Explicit Forward Congestion Indication (EFCI) cell information received at the destination end system, with state changes signaled back to the source end system using end-to-end (backward) TM cells.

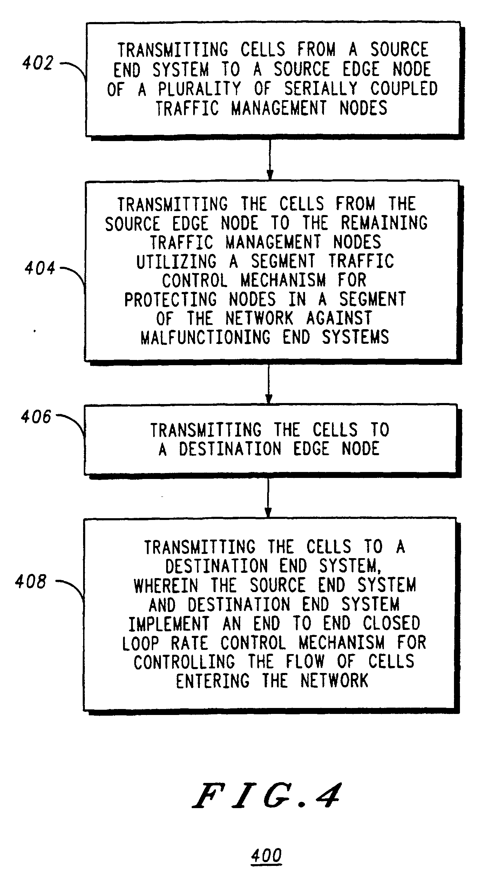

An embodiment of the method of the present invention, the steps of which are shown in a flow chart in FIG. 4, numeral 400, shows a traffic management method for providing cell flow regulation in a cell relay asynchronous transfer mode (ATM) communication network. The embodiment includes the steps of: (A) transmitting cells from a source end system to a source edge node of a plurality of serially coupled traffic management nodes (402); (B) transmitting the cells from the source edge node to the remaining traffic management nodes utilizing a segment traffic control mechanism for protecting nodes in a segment of the network against malfunctioning end systems (404); (C) transmitting the cells to a destination edge node (406), and (D) transmitting the cells to a destination end system, wherein the source end system and destination end system implement an end-to-end closed-loop rate control mechanism for controlling the flow of cells entering the network (408).

The method typically includes the plurality of serially coupled traffic management nodes generating traffic management (TM) cells that are sent to preselected prior nodes within the subnetwork for implementing the segment traffic control mechanism. The method further includes the destination end system (208) generating TM cells that are sent to the source end system for implementing the end-to-end closed-loop rate control mechanism.

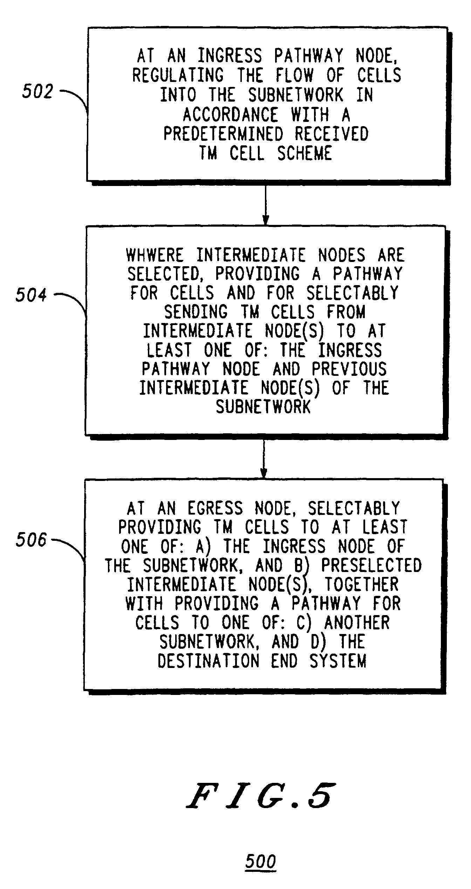

Typically, transmitting the cells from the source edge node to the remaining traffic management nodes utilizing a segment traffic control mechanism for protecting nodes in a segment of the network against malfunctioning end systems (404), shown in FIG. 5, numeral 500, includes: (1) at an ingress pathway node, regulating the flow of cells into the subnetwork in accordance with a predetermined received TM cell scheme (502); (2) where the intermediate nodes are selected, providing a pathway for cells and for selectably sending TM cells from intermediate node(s) (504) to at least one of: the ingress pathway node and previous intermediate node(s) of the subnetwork; and (3) at an egress node, selectably providing TM cells (506) to at least one of: (3a) the ingress node of the subnetwork, and (3b) preselected intermediate node(s), together with providing a pathway for cells to one of: (3c) another subnetwork, and (3d) the destination end system.

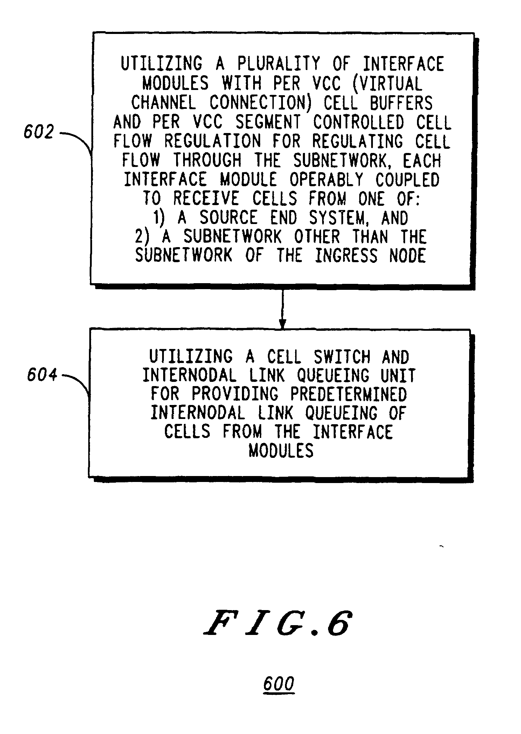

The segment traffic control mechanism, shown in FIG. 6, numeral 600, is implemented by the ingress node and may include the steps of: (A) utilizing a plurality of interface modules with per VCC (Virtual Channel Connection) cell buffers and per VCC segment controlled cell flow regulation for regulating cell flow through the subnetwork, each interface module operably coupled to receive cells from one of: (A1) a source end system, and (A2) a subnetwork other than the subnetwork of the ingress node (602), and (B) utilizing a cell switch and internodal link queueing unit for providing predetermined internodal link queueing of cells from the interface modules (604).

Utilizing a plurality of interface modules with per VCC (Virtual Channel Connection) cell buffers and per VCC segment controlled cell flow regulation, for regulating cell flow through the subnetwork, typically includes the steps of: (A) utilizing a VCC demultiplexer (VCC DEMUX), operably coupled for receive and demultiplexing cells from one of: (A1) a source end system, and (A2) a subnetwork other than the subnetwork of the ingress node; (B) utilizing a plurality of buffers for temporarily holding incoming cells to prevent worsening of congestion along a connection path in the network; (C) utilizing a plurality of cell flow regulators, each operably coupled to one of the buffers and to receive TM cells from within the subnetwork utilizing a virtual channel connection (VCC), for regulating the cell flow according to a predetermined scheme; and (D) utilizing a VCC multiplexer (VCC MUX) for multiplexing received cells.

The end-to-end closed-loop rate control mechanism includes the step of regulating the flow of cells leaving the source end system in accordance with Explicit Forward Congestion Indication cell information received at the destination end system, with state changes signaled back to the source end system using end-to-end (backward) TM cells.

Though, for cost/complexity tradeoffs, a vendor of subnetwork nodes can choose not to implement any segment congestion control mechanism and rely instead on the proper behavior of the end systems to avoid congestion problems, the segment congestion mechanism of the present invention provides added traffic control which may justify the cost and complexity, particularly for a public ATM wide area network.

Both the end-to-end TM cells and the segment TM cells may utilize the ATM Payload Type Indicator (PTI) encoding 110, which is reserved (but still undefined) in the ATM standards for future traffic control and management. A subnetwork that is not implementing a segment traffic management mechanism may ignore cells with this PTI encoding, since all such cells would be end-to-end TM cells. A subnetwork supporting a segment traffic management mechanism may utilize the information contained in both the end-to-end and segment TM cells. Again, all segment TM cells are not permitted to leave the boundaries of the segment, and all end-to-end TM cells can be examined but not altered or discarded by any segment.

Thus, the combination of an end-to-end closed-loop rate control mechanism for controlling the flow of cells entering an ATM network from an ATM end system, along with a segment traffic control mechanism for protecting the segment against misbehaving or malfunctioning end systems provides a novel, more efficient traffic management system and method for cell flow regulation in a cell relay asynchronous transfer mode (ATM) communication network.

It will be obvious to those skilled in the art that many alterations and modifications may be made without departing from the invention. Accordingly, it is intended that all such alterations and modifications be included within the invention as defined in the appended claims.

## Claims

1. A traffic management system (TMS) for providing cell flow regulation in a cell relay communication network, comprising:
(A) a source end system (102, 202), for transmitting cells to a source edge node,
(B) a plurality of traffic management nodes (106, 206), serially coupled to the source edge node, for providing pathway(s) for cells across the network, operably coupled to the source end system, for providing a least cell entry-exit, and a destination edge node, serially coupled to previous serially coupled plurality of node(s), for providing at least cell entry-exit, and
(C) a destination end system (110, 208), operably coupled to the destination edge node, for receiving cells;
**characterized in that** the plurality of traffic management nodes utilize a segment traffic control mechanism (404) for protecting nodes in a segment of the network against malfunctioning end systems, including the source edge node; and
the source end system and destination end system implement an end-to-end closed-loop rate control mechanism for controlling the flow of cells entering the network.

2. The traffic management system of claim 1, wherein the plurality of traffic management nodes include: (A) at least a first subnetwork of nodes (210, 212, 214, 216, 218, 220) that generate traffic management (TM) cells that are sent to preselected prior nodes within the subnetwork for implementing the segment traffic control mechanism, and (B) the destination end system that generates TM cells that are sent to the source end system for implementing the end-to-end closed-loop rate control mechanism.

3. The traffic management system of claim 2 wherein each subnetwork includes:
(A) an ingress node (210,216), operably coupled to receive cells from one of:
(A1) the source end system, and
(A2) an egress node of another subnetwork, for regulating the flow of cells into the subnetwork in accordance with a predetermined received TM cell scheme,
(B) where selected, at least a first intermediate node (212, 218), operably coupled to the ingress node, for providing a pathway for cells and for selectably sending TM cells to at least one of: the ingress node and previous intermediate node(s) of the subnetwork,
(C) an egress node (214, 220), operably coupled to the intermediate node(s), for:
(C1) selectably providing TM cells to at least one of:
(C1a) the ingress node of the subnetwork, and
(C1b) preselected intermediate node(s), and
(C2) providing a pathway for cells to one of:
(C2a) another subnetwork and
(C2b) the destination end system.

4. The traffic management system of claim 3, wherein the segment traffic control mechanism is implemented by the ingress node and the ingress node comprises:
(A) a plurality of interface modules (302, 304, 306) with per Virtual Channel Connection (VCC) cell buffers and per VCC segment controlled cell flow regulation, for regulating cell flow through the subnetwork, each operably coupled to receive cells from one of:
(A1) a source end system, and
(A2) A subnetwork other than the subnetwork of the ingress node, and
(B) a cell switch and internodal link queuing unit (308), operably coupled to the plurality of interface modules, for providing predetermined internodal link queuing of cells from the interface modules, and where further selected:
wherein each interface module comprises C-F:
(C) a VCC demultiplexer (VCC DEMUX) (310), operably coupled to receive and demultiplex cells from one of:
(C1) a source end system, and
(C2) a subnetwork other than the subnetwork of the ingress node,
(D) a plurality of buffers (312, 316), each coupled to the VCC DEMUX, for temporarily holding incoming cells to prevent worsening of congestion along a connection path in the network,
(E) a plurality of cell flow regulators (314, 318), each operably coupled to one of the buffers and to receive TM cells from within the subnetwork utilizing a virtual channel connection (VCC), for regulating the cell flow according to a predetermined scheme, and
(F) a VCC multiplexer (VCC MUX) (320), operably coupled to the plurality of cell flow regulators, for multiplexing received cells.

5. The traffic management system of claim 2 wherein the end-to-end closed-loop rate control mechanism regulates the flow of cells leaving the source end system in accordance with Explicit Forward Congestion Indication cell information received at the destination end system, with congestion state changes signaled back to the source end system using end-to-end (backward) TM cells.

6. A traffic management method for providing cell flow regulation in a cell relay communication network, comprising the steps of:
(A) transmitting cells from a source end system to a source edge node of a plurality of serially coupled traffic management nodes (402),
(B) transmitting the cells from the source edge node to the remaining traffic management nodes (404),
(C) transmitting the cells to a destination edge node (406), and
(D) transmitting the cells to a destination end system (408);
**characterized in that**:
the step of transmitting the cells from the source edge node to the remaining traffic management nodes comprises utilizing a segment traffic control mechanism protecting nodes in a segment of the network against malfunctioning end systems(404); and
the source end system and destination end system implement an end-to-end closed-loop rate control mechanism for controlling the flow of cells entering the network (408).

7. The traffic management method of claim 6 including the steps of:
(A) the plurality of serially coupled traffic management nodes generating traffic management (TM) cells that are sent to preselected prior nodes within the subnetwork for implementing the segment traffic control mechanism, and
(B) the destination end system generating TM cells that are sent to the source end system for implementing the end-to-end closed-loop rate control mechanism.

8. The traffic management method of claim 7 including, at the plurality of traffic management nodes, the steps of:
(A) at an ingress pathway node, regulating the flow of cells into the subnetwork in accordance with a predetermined received TM cell scheme (502),
(B) providing a pathway for cells and for selectably sending TM cells from intermediate node(s) at least one of: the ingress pathway node and, where selected, previous intermediate node(s) of the subnetwork (504),
(C) at an egress node, selectably providing TM cells to at least one of:
(C1a) the ingress node of the subnetwork, and
(C1b) preselected intermediate node(s), and
(C2) providing a pathway for cells to one of:
(C2a) another subnetwork and
(C2b) the destination end system (506).

9. The traffic management method of claim 8 wherein the segment traffic control mechanism is implemented by the ingress node and includes the steps of:
(A) utilizing a plurality of interface modules with per Virtual Channel Connection (VCC) cell buffers and per VCC segment controlled cell flow regulation, for regulating cell flow through the subnetwork, each operably coupled to receive cells from one of:
(A1) a source end system, and
(A2) a subnetwork other than the subnetwork of the ingress node (602), and
(B) utilizing a cell switch and internodal link queuing unit for providing predetermined internodal link queuing of cells from the interface modules (604), and where further selected:
wherein utilizing a plurality of interface modules with per VCC (Virtual Channel Connection) cell buffers and per VCC segment controlled cell flow regulation, for regulating cell flow through the subnetwork, includes the steps of C-F:
(C) utilizing a VCC demultiplexer (VCC DEMUX), operably coupled for receive and demultiplexing cells from one of:
(C1) a source end system, and
(C2) a subnetwork other than the subnetwork of the ingress node,
(D) utilizing a plurality of buffers for temporarily holding incoming cells to prevent worsening of congestion along a connection path in the network,
(E) utilizing a plurality of cell flow regulators, each operably coupled to one of the buffers and to receive TM cells from within the subnetwork utilizing a virtual channel connection (VCC), for regulating the cell flow according to a predetermined scheme, and
(F) utilizing a VCC multiplexer (VCC MUX) for multiplexing received cells.

10. The traffic management method of claim 8 wherein the end-to-end closed-loop rate control mechanism includes the step of regulating the flow of cells leaving the source end system in accordance with Explicit Forward Congestion Indication cell information received at the destination end system, with state changes signaled back to the source end system using end-to-end (backward) TM cells.

## Patentansprüche

1. Verkehrsverwaltungssystem ("TMS = traffic management system") zum Bereitstellen einer Zellflussregulation in einem Cell-Relay-Kommunikationsnetzwerk, umfassend:
(A) ein Quellenendsystem (102, 202), zum Übertragen von Zellen an einen Quellenrandknoten,
(B) eine Mehrzahl von Verkehrsverwaltungsknoten (106, 206), die seriell an den Quellenrandknoten gekoppelt sind, zum Bereitstellen von einem oder mehreren Wegen für Zellen in dem Netzwerk, betriebsfähig an das Quellenendsystem gekoppelt, um zumindest einen Zell-Eintritt-Austritt zur Verfügung zu stellen, und einen Bestimmungsrandknoten, der seriell an die vorherige seriell gekoppelte Mehrzahl von einem oder mehreren Knoten gekoppelt ist, um zumindest einen Zell-Eintritt-Austritt zur Verfügung zu stellen, und
(C) ein Bestimmungsendsystem (110, 208), das betriebsfähig an den Bestimmungsrandknoten gekoppelt ist, um Zellen zu empfangen;
**dadurch gekennzeichnet, dass** die Mehrzahl von Verkehrsverwaltungsknoten einen Segmentverkehrssteuermechanismus (404) verwenden, um Knoten in einem Segment des Netzwerks gegen fehlerhaft funktionierende Endsysteme zu schützen, einschließlich des Quellenrandknotens; und
dass das Quellenendsystem und das Bestimmungsendsystem einen Ende-zu-Ende-Raten-Steuermechanismus mit geschlossener Schleife implementieren, um den Fluss von Zellen zu steuern, die in das Netzwerk eintreten.

2. Verkehrsverwaltungssystem nach Anspruch 1, wobei die Mehrzahl von Verkehrsverwaltungsknoten umfasst:
(A) mindestens ein erstes Unternetzwerk von Knoten (210, 212, 214, 216, 218, 220), die Verkehrsverwaltungszellen (TM-Zellen, "TM = traffic management") erzeugen, die an vorausgewählte vorherige Knoten innerhalb des Unternetzwerks gesendet werden, um den Segmentverkehrssteuermechanismus zu implementieren, und (B) das Bestimmungsendsystem, das TM-Zellen erzeugt, die an das Quellenendsystem gesendet werden, um den Ende-zu-Ende-Raten-Steuermechanismus mit geschlossener Schleife zu implementieren.

3. Verkehrsverwaltungssystem nach Anspruch 2, wobei jedes Unternetzwerk umfasst:
(A) einen Eingangsknoten (210, 216), der betriebsfähig so gekoppelt ist, dass er Zellen empfängt von entweder:
(A1) dem Quellenendsystem, oder
(A2) einem Ausgangsknoten eines weiteren Unternetzwerks, um den Fluss von Zellen in das Unternetzwerk gemäß einem vorbestimmten empfangenen TM-Zellschema zu regulieren,
(B) wo ausgewählt, zumindest einen ersten Zwischenknoten (212, 218), der betriebsfähig an den Eingangsknoten gekoppelt ist, um einen Weg für Zellen zur Verfügung zu stellen und um die TM-Zellen wählbar an den Eingangsknoten und/oder einen oder mehrere vorausgehende Zwischenknoten des Unternetzwerks zu senden,
(C) einen Ausgangsknoten (214, 220), der betriebsfähig an den oder die Zwischenknoten gekoppelt ist, um:
(C1) wählbar TM-Zellen zur Verfügung zu stellen an:
(C1a) den Eingangsknoten des Unternetzwerkes, und/oder
(C1b) den oder die vorausgewählten Zwischenknoten, und
(C2) einen Weg für Zellen zur Verfügung zu stellen an entweder:
(C2a) ein weiteres Unternetzwerk oder
(C2b) das Bestimmungsendsystem.

4. Verkehrsverwaltungssystem, nach Anspruch 3, wobei der Segmentverkehrssteuermechanismus durch den Eingangsknoten implementiert ist, und wobei der Eingangsknoten umfasst:
(A) eine Mehrzahl von Schnittstellenmodulen (302, 304, 306) mit jeweils VCC-Zellpuffern ("VCC = Virtual Channel Connection"/virtuelle Kanalverbindung) und jeweils VCC-segmentkontrollierter Zellflussregulation, zum Regulieren des Zellflusses durch das Unternetzwerk, wobei jedes betriebsfähig so gekoppelt ist, dass es Zellen empfangen kann von entweder:
(A1) einem Quellenendsystem, oder
(A2) einem von dem Unternetzwerk des Eingangsknotens verschiedenen Unternetzwerk, und
(B) eine Zellschalt- und ZwischenknotenverbindungsWarteschlangeneinheit (308), die betriebsfähig an die Mehrzahl von Schnittstellenmodulen gekoppelt ist, um eine vorbestimmte Zwischenknotenverbindungs-Warteschlange der Zellen von den Schnittstellenmodulen zur Verfügung zu stellen, und, wo weiterhin ausgewählt:
wobei jedes Schnittstellenmodul umfasst C-F:
(C) einen VCC-Demultiplexer (VCC DEMUX) (310), der betriebsfähig so gekoppelt ist, dass er Zellen empfangen und demultiplexen kann von entweder:
(C1) einem Quellenendsystem, oder
(C2) einem von dem Unternetzwerk des Eingangsknotens verschiedenen Unternetzwerk,
(D) eine Mehrzahl von Puffern (312, 316), jeweils an den VCC DEMUX gekoppelt, um temporär eingehende Zellen zu halten, um ein Verschlimmern einer Überlastung entlang eines Verbindungsweges in dem Netzwerk zu vermeiden,
(E) eine Mehrzahl von Zellflussregulatoren (314, 318), jeweils betriebsfähig an einen der Puffer und zum Empfangen von TM-Zellen von innerhalb des Unternetzwerkes gekoppelt, das eine virtuelle Kanalverbindung (VCC) verwendet, zum Regulieren des Zellflusses gemäß einem vorbestimmten Schema.
(F) einen VCC-Multiplexer (VCC-MUX) (320), der betriebsfähig an die Mehrzahl von Zellflussregulatoren gekoppelt ist, um empfangen Zellen zu multiplexen.

5. Verkehrsverwaltungssystem nach Anspruch 2, wobei der Ende-zu-Ende-Raten-Steuermechanismus mit geschlossener Schleife den Fluss von Zellen reguliert, die das Quellenendsystem verlassen, gemäß einer Zelleninformation hinsichtlich einer expliziten Vorwärtsüberlastungsanzeige ("Explicit Forward Congestion Indication"), die an dem Bestimmungsendsystem empfangen wurde, wobei Überlastungszustandsveränderungen zurück an das Quellenendsystem unter Verwendung von Ende-zu-Ende-(Rückwärts)-TM-Zellen signalisiert werden.

6. Verkehrsverwaltungsverfahren zum Bereitstellen einer Zellflussregulation in einem Cell-Relay-Kommunikationsnetzwerk, das die Schritte umfasst:
(A) Übertragen von Zellen von einem Quellenendsystem an einen Quellenrandknoten einer Mehrzahl von seriell gekoppelten Verkehrsverwaltungsknoten (402),
(B) Übertragen der Zellen von den Quellenrandknoten an die verbleibenden Verkehrsverwaltungsknoten (404),
(C) Übertragen der Zellen an einen Bestimmungsendrandknoten (406), und
(D) Übertragen der Zellen an ein Bestimmungsendsystem (408) ;
**dadurch gekennzeichnet, dass**:
der Schritt des Übertragens der Zellen von dem Zellenrandknoten an die verbleibenden Verkehrsverwaltungsknoten das Verwenden eines Segementverkehrssteuermechanismus umfasst, der Knoten in einem Segment des Netzwerks gegen fehlerhaft funktionierende Endsysteme (404) schützt; und
das Quellenendsystem und das Bestimmungsendsystem einen Ende-zu-Ende-Raten-Steuermechanismus mit geschlossener Schleife implementieren, um den Fluss von Zellen, die in das Netzwerk (408) eintreten, zu steuern.

7. Verkehrsverwaltungsverfahren nach Anspruch 6, das die Schritte umfasst:
(A) das Erzeugen von Verkehrsverwaltungszellen (TM-Zellen, "TM = traffic management") durch die Mehrzahl von seriell gekoppelten Verkehrsverwaltungsknoten, wobei die TM-Zellen an vorausgewählte vorherige Knoten innerhalb des Unternetzwerks gesendet werden, zum Implementieren von Segmentverkehrssteuermechanismen, und
(B) das Erzeugen von TM-Zellen durch das Bestimmungsendsystem, wobei die TM-Zellen an das Quellenendsystem gesendet werden, zum Implementieren des Ende-zu-Ende-Raten-Steuermechanismus mit geschlossener Schleife.

8. Verkehrsverwaltungsverfahren nach Anspruch 7, das an der Mehrzahl von Verkehrsverwaltungsknoten die Schritte umfasst:
(A) An einem Eingangswegeknoten, Regulieren des Flusses von Zellen in das Unternetzwerk gemäß einem vorbestimmten empfangenen TM-Zell-Schema (502),
(B) Bereitstellen eines Weges für Zellen zum wählbaren Senden von TM-Zellen von einem oder mehreren Zwischenknoten: dem Eingangswegeknoten und/oder, wo gewählt, einem oder mehreren vorhergehenden Zwischenknoten des Unternetzwerks (504),
(C) an einem Ausgangsknoten, wählbares Bereitstellen vom TM-Zellen an:
(C1a) den Eingangsknoten des Unternetzwerks, und/oder
(C1b) den oder die vorgewählten Zwischenknoten, und
(C2) Bereitstellen eines Weges für Zellen an entweder:
(C2a) ein weiteres Unternetzwerk oder
(C2b) das Bestimmungsendsystem (506).

9. Verkehrsverwaltungsverfahren nach Anspruch 8, wobei der Segmentverkehrssteuermechanismus durch den Eingangsknoten implementiert ist und die Schritte umfasst:
(A) Verwenden einer Mehrzahl von Schnittstellenmodulen mit jeweils VCC-Zellpuffern ("VCC = Virtual Channel Connection"/virtuelle Kanalverbindung) und jeweils VCC-segmentkontrollierter Zellflussregulation, um den Zellfluss durch das Unternetzwerk zu regulieren, wobei jedes betriebsfähig so gekoppelt ist, dass es Zellen empfängt von entweder:
(A1) einem Quellenendsystem, oder
(A2) einem von dem Unternetzwerk des Eingangsknotens (602) verschiedenen Unternetzwerk, und
(B) Verwenden einer Zellschalt- und Zwischenknotenverbindungs-Warteschlangeneinheit zum Bereitstellen einer vorbestimmten Zwischenknotenverbindungs-Warteschlange der Zellen von den Schnittstellenmodulen (604), und, wo weiterhin ausgewählt:
wobei das Verwenden einer Mehrzahl von Schnittstellenmodulen mit jeweils VCC-Zellpuffern und jeweils VCC-segmentkontrollierter Zellflussregulation, zum Regulieren des Zellflusses durch das Unternetzwerk, die Schritte umfasst C-F:
(C) Verwenden eines VCC-Demultiplexers (VCC DEMUX), der betriebsfähig so gekoppelt ist, dass er Zellen empfangen und demultiplexen kann von entweder:
(C1) einem Quellenendsystem, oder
(C2) einem von dem Unternetzwerk des Eingangsknotens verschiedenen Unternetzwerk,
(D) Verwenden einer Mehrzahl von Puffern zum temporären Halten von eingehenden Zellen, um ein Verschlimmern einer Überlastung entlang eines Verbindungsweges in dem Netzwerk zu vermeiden,
(E) Verwenden einer Mehrzahl von Zellflussregulatoren, jeweils betriebsfähig an einen der Puffer und zum Empfangen von TM-Zellen von innerhalb des Unternetzwerkes gekoppelt, unter Verwendung einer virtuellen Kanalverbindung (VCC), zum Regulieren des Zellflusses gemäß einem vorbestimmten Schema,
(F) Verwenden eines VCC-Multiplexers (VCC MUX) zum Multiplexen von empfangenen Zellen.

10. Verkehrverwaltungsverfahren nach Anspruch 8, wobei der Ende-zu-Ende-Raten-Steuermechanismus mit geschlossener Schleife den Schritt des Regulierens des Flusses von Zellen umfasst, die das Quellenendsystem verlassen, gemäß einer Zellinformation hinsichtlich einer expliziten Vorwärtsüberlastungsanzeige ("Explicit Forward Congestion Indication"), die an dem Bestimmungsendsystem empfangen wurde, wobei Statusänderungen an das Quellenendsystem unter Verwendung von Ende-zu-Ende-(Rückwärts)-TM-Zellen signalisiert werden.

## Revendications

1. système de gestion de trafic (TMS) destiné à assurer une régulation de flux de cellule dans un réseau de communication à relais de cellules, comprenant :
(A) un système final source (102, 202), destiné à transmettre des cellules à un noeud de bord source,
(B) une pluralité de noeuds de gestion de trafic (106, 206), couplés en série au noeud de bord source, destinés à offrir un/des chemin(s) aux cellules au sein du réseau, couplés de manière opérationnelle au système final source, afin de fournir au moins une entrée/sortie de cellule, et un noeud de bord de destination, couplé en série à la pluralité précédente de noeuds couplés en série, afin de fournir au moins une entrée/sortie de cellule, et
(C) un système final de destination (110, 208), couplé de manière opérationnelle au noeud de bord de destination, afin de recevoir des cellules ;
**caractérisé en ce que** la pluralité de noeuds de gestion de trafic utilise un mécanisme de contrôle de trafic segmenté (404) afin de protéger les noeuds situés au sein d'un segment du réseau contre les systèmes finaux défaillants, y compris le noeud de bord source ; et
le système final source et le système final de destination mettent en oeuvre un mécanisme de contrôle de la vitesse en boucle fermée, de bout en bout, permettant de contrôler le flux de cellules pénétrant sur le réseau.

2. Système de gestion de trafic selon la revendication 1, dans lequel la pluralité de noeuds de gestion de trafic comprend : (A) au moins un premier sous-réseau de noeuds (210, 212, 214, 216, 218, 220) qui génèrent des cellules de gestion de trafic (TM) qui sont envoyées à des noeuds antérieurs présélectionnés au sein du réseau afin de mettre en oeuvre le mécanisme de contrôle de trafic segmenté, et (B) le système final de destination qui génère des cellules TM qui sont envoyées au système final source afin de mettre en oeuvre le mécanisme de contrôle de vitesse en boucle fermée et de bout en bout.

3. Système de gestion de trafic selon la revendication 2, dans lequel chaque sous-réseau comprend :
(A) un noeud d'entrée (210, 216), couplé de manière opérationnelle afin de recevoir des cellules provenant de l'un :
(A1) du système final source, et
(A2) d'un noeud de sortie d'un autre sous-réseau, afin de réguler le flux de cellules au sein du sous-réseau selon un schéma de cellules TM reçues prédéterminé,
(B) le cas échéant, au moins un premier noeud intermédiaire (212, 218), couplé de manière opérationnelle au noeud d'entrée, afin d'offrir un chemin aux cellules et d'envoyer de manière sélective des cellules TM à au moins l'un : du noeud d'entrée et du/des noeud(s) intermédiaire(s) précédent(s) du sous-réseau,
(C) un noeud de sortie (214, 220), couplé de manière opérationnelle au (x) noeud(s) intermédiaire(s), afin de :
(C1) fournir de manière sélective des cellules TM à au moins l'un :
(C1a) du noeud d'entrée du sous-réseau, et
(C1b) du/des noeud(s) intermédiaire(s) présélectionné(s), et
(C2) fournir un chemin destiné aux cellules à l'un :
(C2a) d'un autre sous-réseau, et
(C2b) du système final de destination.

4. Système de gestion de trafic selon la revendication 3, dans lequel le mécanisme de contrôle de trafic segmenté est mis en oeuvre par le noeud d'entrée, et le noeud d'entrée comprend :
(A) une pluralité de modules d'interface (302, 304, 306) ayant des mémoires tampon de cellules à connexion de canal virtuel (VCC) et une régulation de flux de cellules contrôlée par segments, afin de réguler le flux de cellules au sein du sous-réseau, chacun couplés de manière opérationnelle afin de recevoir des cellules de la part de l'un :
(A1) d'un système final source, et
(A2) d'un sous-réseau autre que le sous-réseau du noeud d'entrée, et
(B) une unité de commutation de cellules et de mise en file d'attente par liaison intermodale (308), couplée de manière opérationnelle à la pluralité de modules d'interface, afin d'assurer une mise en file d'attente par liaison intermodale prédéterminée des cellules provenant des modules d'interface,
et, le cas échéant :
dans lequel chaque module d'interface comprend C à F :
(C) un démultiplexeur VCC (VCC DEMUX) (310), couplé de manière opérationnelle afin de recevoir et de démultiplexer des cellules provenant de l'un :
(C1) d'un système final source, et
(C2) d'un sous-réseau autre que le sous-réseau du noeud d'entrée,
(D) une pluralité de mémoires tampon (312, 316), chacune couplées au VCC DEMUX, afin de conserver temporairement les cellules entrantes de façon à empêcher toute aggravation de la congestion le long d'un chemin de connexion au sein du réseau,
(E) une pluralité de régulateurs de flux de cellules (314, 318), chacun couplés de manière opérationnelle à l'une des mémoires tampon, et destinés à recevoir des cellules TM de la part du sous-réseau en utilisant une connexion de canal virtuel (VCC), afin de réguler le flux de cellules selon un schéma prédéterminé, et
(F) un multiplexeur VCC (VCC MUX) (320), couplé de manière opérationnelle à la pluralité de régulateurs de flux de cellules, afin de multiplexer les cellules reçues.

5. Système de gestion de trafic selon la revendication 2, dans lequel le mécanisme de contrôle de la vitesse en boucle fermée et de bout en bout régule le flux de cellules quittant le système final source selon des informations de cellules d'Indication de Congestion Explicite reçues au niveau du système final de destination, avec les changements d'état de congestion signalés au système final source à l'aide de cellules TM de bout en bout (de retour).

6. Procédé de gestion de trafic destiné à assurer une régulation de flux de cellule dans un réseau de communication à relais de cellules, comprenant les étapes consistant à :
(A) transmettre des cellules entre un système final source et un noeud de bord source d'une pluralité de noeuds de gestion de trafic couplés en série (402),
(B) transmettre les cellules entre le noeud de bord source et le les noeuds de gestion de trafic restants (404),
(C) transmettre les cellules à un noeud de bord de destination (406), et
(D) transmettre les cellules à un système final de destination (408) ;
**caractérisé en ce que** :
l'étape de transmission des cellules entre le noeud de bord source et les noeuds de gestion de trafic restants comprend l'utilisation d'un mécanisme de contrôle du trafic segmenté protégeant les noeuds situés au sein d'un segment du réseau contre les systèmes finaux défaillants (404) ; et
le système final source et le système final de destination mettent en oeuvre un mécanisme de contrôle de la vitesse en boucle fermée et de bout en bout afin de contrôler le flux de cellules pénétrant sur le réseau (408).

7. Procédé de gestion de trafic selon la revendication 6, comprenant les étapes consistant en ce que :
(A) la pluralité de noeuds de gestion de trafic couplés en série génère des cellules de gestion de trafic (TM) qui sont envoyées à des noeuds antérieurs présélectionnés au sein du sous-réseau afin de mettre en oeuvre le mécanisme de contrôle de trafic segmenté, et
(B) le système final de destination génère des cellules TM qui sont envoyées au système final source afin de mettre en oeuvre le mécanisme de contrôle de la vitesse en boucle fermée et de bout en bout.

8. Procédé de gestion de trafic selon la revendication 7, comprenant, au niveau de la pluralité de noeuds de gestion de trafic, les étapes consistant à :
(A) au niveau d'un noeud de chemin d'entrée, réguler le flux de cellules sur le sous-réseau selon un schéma de cellules TM reçues prédéterminé (502),
(B) fournir un chemin aux cellules, et envoyer de manière sélective les cellules TM entre le(s) noeud(s) intermédiaire(s) et au moins l'un : du noeud de chemin d'entrée et, le cas échéant, du/des noeud(s) intermédiaire(s) précédent(s) du sous-réseau (504),
(C) au niveau d'un noeud de sortie, fournir de manière sélective les cellules TM à au moins l'un :
(C1a) du noeud d'entrée du sous-réseau, et
(C1b) du/des noeud(s) intermédiaire(s) présélectionné(s), et
(C2) fournir un chemin destiné aux cellules, vers l'un :
(C2a) d'un autre sous-réseau, et
(C2b) du système final de destination (506).

9. Procédé de gestion de trafic selon la revendication 8, dans lequel le mécanisme de contrôle de trafic segmenté est mis en oeuvre par le noeud d'entrée et comprend les étapes consistant à :
(A) utiliser une pluralité de modules d'interface ayant des mémoires tampon de cellules à connexion de canal virtuel (VCC) et une régulation de flux de cellules contrôlée par segments, afin de réguler le flux de cellules au sein du sous-réseau, chacun couplés de manière opérationnelle afin de recevoir des cellules de la part de l'un :
(A1) d'un système final source, et
(A2) d'un sous-réseau autre que le sous-réseau du noeud d'entrée (602), et
(B) utiliser une unité de commutation de cellules et de mise en file d'attente par liaison intermodale afin d'assurer une mise en file d'attente par liaison intermodale sélectionnée des cellules provenant des modules d'interface (604),
et, le cas échéant :
dans lequel l'utilisation d'une pluralité de modules d' interface ayant des mémoires tampon de cellules à connexion de canal virtuel (VCC) et une régulation de flux de cellules contrôlée par segments, afin de réguler le flux de cellules au sein du sous-réseau, comprend les étapes C à F :
(C) l'utilisation d'un démultiplexeur VCC (VCC DEMUX), couplé de manière opérationnelle afin de recevoir et de démultiplexer les cellules provenant de l'un :
(C1) d'un système final source, et
(C2) d'un sous-réseau autre que le sous-réseau du noeud d'entrée,
(D) l'utilisation d'une pluralité de mémoires tampon afin de conserver temporairement les cellules entrantes de façon à empêcher toute aggravation de la congestion le long d'un chemin de connexion au sein du réseau,
(E) l'utilisation d'une pluralité de régulateurs de flux de cellules, chacun couplés de manière opérationnelle à l'une des mémoires tampon, et destinés à recevoir des cellules TM de la part du sous-réseau en utilisant une connexion de canal virtuel (VCC), afin de réguler le flux de cellules selon un schéma prédéterminé, et
(F) l'utilisation d'un multiplexeur VCC (VCC MUX) afin de multiplexer les cellules reçues.

10. Procédé de gestion de trafic selon la revendication 8, dans lequel le mécanisme de contrôle de la vitesse en boucle fermée et de bout en bout comprend l'étape consistant à réguler le flux de cellules quittant le système final source selon des informations de cellules d'Indication de Congestion Explicite reçues au niveau du système final de destination, avec les changements d'état signalés au système final source à l'aide de cellules TM de bout en bout (de retour).
